# EUROPÄISCHE PATENTANMELDUNG

(11) **EP 0 920 104 A2**
(43) Veröffentlichungstag der Anmeldung: **02.06.1999**
(21) Anmeldenummer: 98120612.1
(22) Anmeldetag: 02.11.1998
(51) Int. Cl.: H02J 3/01

(54) **Niederspannungsnetz mit einem auf eine bestimmte-Strom-Oberschwingung abgestimmten Filter**

(30) Priorität: 24.11.1997 DE 19752018
(71) Anmelder: ABB PATENT GmbH, 68309 Mannheim (DE)
(72) Erfinder: Danek, Heinz Dieter, 59929 Brilon (DE); Daldrup, Manfred, Dipl.-Ing., 59929 Brilon (DE)
(74) Vertreter: Miller, Toivo

(57) **Zusammenfassung**

Es wird ein Niederspannungsnetz (1) mit einem auf eine bestimmte Strom-Oberschwingung - vorzugsweise auf die dritte Oberschwingung - abgestimmten Filter vorgeschlagen. Das Filter (7) ist unmittelbar zwischen der mindestens einen Sicherung (3, 4, 5) eines Unterverteilungs-Niederspannungsnetzes (2) und den Verbrauchern seriell in den Phasen des Niederspannungsnetzes eingeschleift. Das Filter verhindert eine Überlastung und Überhitzung des Nulleiters.

## Beschreibung

Die Erfindung bezieht sich auf ein Niederspannungsnetz mit einem auf eine bestimmte Strom-Oberschwingung abgestimmten Filter gemäß dem Oberbegriff des Anspruchs 1 und kann insbesondere bei TN-C-Niederspannungsnetzen verwendet werden.

Einphasig angeschlossene Verbraucher, die einen hohen Strom der dritten Oberschwingung erzeugen, stellen in elektrischen Niederspannungsnetzen eine kritische Belastung dar, weil die Ströme der dritten Oberschwingung sich als Nullsystem im Nulleiter (N-Leiter) summieren. Dies kann zu Überlastung und Überhitzung des Nullleiters in Kabeln und Leitungen der Elektroversorgung führen. Darüber hinaus beeinträchtigt die pulsförmige Stromaufnahme solcher Geräte in hohem Maße die Leistungsfähigkeit von USV-Anlagen (Unterbrechungsfreie Stromversorgung).

Aus der FI 98009 C1 ist ein Verfahren zur Eliminierung von Störungen in elektrischen Versorgungsnetzen und der Einbau eines diese Störungen reduzierenden Filters in das Versorgungsnetz bekannt. Es wird ein auf die dritte Oberschwingung abgestimmtes Filter vorgeschlagen, das bei TN-S-Netzen oder TN-C-S-Netzen im Nulleiter und bei TN-C-Netzen zwischen Transformator-Sternpunkt und Erdung einzubauen ist.

Viele elektrische Versorgungsnetze sind als TN-C-Netze aufgebaut und bestehen somit aus vier Leitern, nämlich drei Phasen und einem PEN-Leiter (gleichermaßen Schutzleiter und Nulleiter). Beim Vorschlag gemäß FI 98009 C1, das Filter zwischen Transformator-Sternpunkt und Erdung des Sternpunktes einzubauen, muß das Filter für den Gesamtstrom dimensioniert werden. In den Fällen, in denen Probleme mit den Strömen der dritten Oberschwingung nur in einzelnen und nicht in allen an diesen Transformator angeschlossenen Unterverteilungs-Niederspannungsnetzen auftreten, ist die Realisierung dieses Vorschlag technisch und wirtschaftlich sehr aufwendig. Auch die weitere Alternative gemäß FI 98009 C1, das TN-C-Netz zu einem TN-C-S-Netz (Fünfleiternetz mit drei Phasen, einem Nulleiter und einem Schutzleiter) auszubauen, ist technisch und wirtschaftlich sehr aufwendig.

Der Erfindung liegt die Aufgabe zugrunde, ein Niederspannungsnetz mit einem auf eine bestimmte Strom-Oberschwingung abgestimmten Filter der eingangs genannten Art anzugeben, bei dem in technisch und wirtschaftlich optimaler Weise eine Überlastung des Nulleiters ausgeschlossen ist.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß das Filter die Entstehung der Ströme der (vorzugsweise) dritten Oberschwingung unterdrückt und damit eine Überlastung und Überhitzung des Nulleiters verhindert. Ein weiterer positiver Effekt ist, daß das Filter zusätzlich auch andere Oberschwingungsströme reduziert und damit die Verlustleistung und die Energiekosten im elektrischen Versorgungsnetz senkt. Darüber hinaus wird der Crestfaktor (Verhältnis vom Scheitelwert zum Effektivwert) des Stromes wesentlich reduziert, woraus sich beispielsweise eine bessere Auslastbarkeit von USV-Anlagen ergibt.

Die Erfindung wird nachstehend anhand der in der Zeichnung dargestellten Ausführungsbeispiele erläutert. Es zeigen:
- Fig. 1: den Anschluß eines Filters bei einer dreiphasigen Unterverteilung eines Niederspannungsnetzes,
- Fig. 2: den Anschluß eines Filters bei einer einphasigen Unterverteilung eines Niederspannungsnetzes.

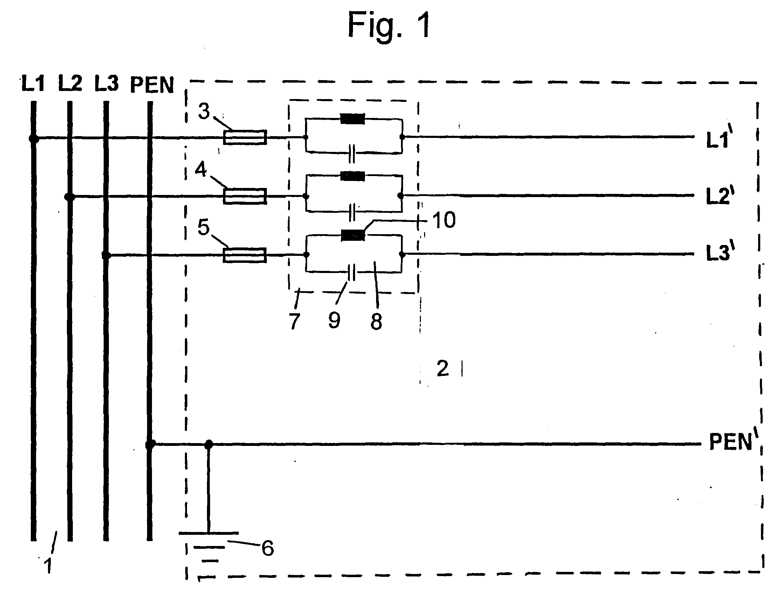

In Fig. 1 ist der Anschluß eines Filters bei einer dreiphasigen Unterverteilung eines Niederspannungsnetzes dargestellt. Es ist ein TN-C-Niederspannungsnetz 1 mit drei Phasen L1, L2, L3 und einem PEN-Leiter (gleichermaßen Schutzleiter und Nulleiter) PEN zu erkennen. An dieses TN-C-Niederspannungsnetz 1 ist ein ebenfalls als TN-C-Netz ausgebildetes Unterverteilungs-Niederspannungsnetz 2 angeschlossen, bestehend aus den Phasen L1', L2', L3' und dem PEN-Leiter PEN'.

Das Unterverteilungs-Niederspannungsnetz 2 ist über einen Sicherungsabgang mit den Sicherungen 3, 4, 5 an das TN-C-Niederspannungsnetz 1 angeschlossen. Die Erdung des PEN-Leiter PEN' des Unterverteilungs-Niederspannungsnetzes ist mit Ziffer 6 bezeichnet. Mit den Ausgängen des Sicherungsabganges ist ein serielles, dreiphasiges Filter 7 verbunden.

Das Filter 7 weist drei getrennte Parallelschwingkreise 8 auf, die jeweils aus einem Kondensator 9 und einer Drossel 10 bestehen. Die Kapazität der Kondensatoren 9 und die Induktivität der Drosseln 10 sind derart aufeinander abgestimmt, daß sich auf die dritte Oberschwingung abgestimmte Parallelschwingkreise ergeben, so daß bei einer Netzfrequenz von beispielsweise 50 Hz die Impedanz der Parallelschwingkreise niedrig und bei der dritten Oberschwingung von beispielsweise 150 Hz die Impedanz der Parallelschwingkreise hoch ist.

Die Unterdrückung der dritten Oberschwingung führt zu einer Veränderung der Stromkurve insgesamt, mit der Folge geringerer Oberschwingungsströme bei allen weiteren störenden Oberschwingungsfrequenzen.

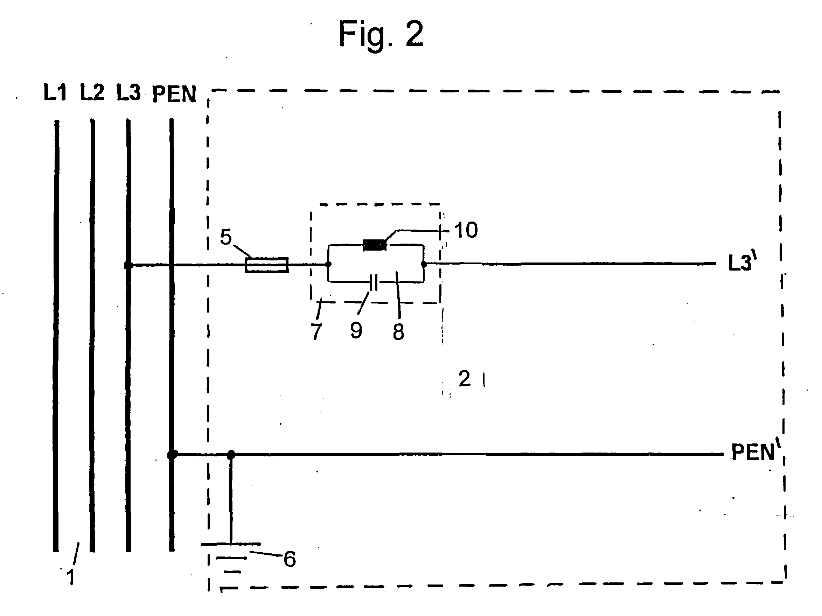

In Fig. 2 ist der Anschluß des Filters bei einer einphasigen Unterverteilung eines Niederspannungsnetzes dargestellt. Das in diesem Ausführungsbeispiel einphasige Filter 7 ist eingangsseitig mit der zur Phase L3' führenden Sicherung 5 des Sicherungsabganges und ausgangsseitig mit der Phase L3' des Unterverteilungs-Niederspannungsnetzes 2 verbunden.

Wenn vorstehend stets die Rede von der Unterdrückung der dritten Oberschwingungen ist, so heißt dies dennoch nicht, daß die Erfindung hierauf beschränkt wäre. In Unterverteilungs-Niederspannungsnetzen, in denen in erster Linie nicht die dritten, sondern die fünften Oberschwingungen Probleme bereiten, ist es beispielsweise sinnvoll, das Filter entsprechend auf die fünfte Oberschwingung abzustimmen.

## Patentansprüche

1. Niederspannungsnetz mit einem auf eine bestimmte Strom-Oberschwingung - vorzugsweise auf die dritte Oberschwingung - abgestimmten Filter, dadurch gekennzeichnet, daß das Filter (7) unmittelbar zwischen der mindestens einen Sicherung (3, 4, 5) eines Unterverteilungs-Niederspannungsnetzes (2) und den Verbrauchern seriell in den Phasen des Niederspannungsnetzes eingeschleift ist.

2. Niederspannungsnetz nach Anspruch 1, gekennzeichnet durch eine dreiphasige Ausbildung des Filters (7).

3. Niederspannungsnetz nach Anspruch 1 und/oder 2, dadurch gekennzeichnet, daß das Filter (2) eine Kondensator/Drossel-Parallelschaltung (9/10) in Serie zu jeder Phase aufweist.
